# EUROPÄISCHE PATENTSCHRIFT

(11) **EP 3 768 579 B1**
(45) Veröffentlichungstag und Bekanntmachung des Hinweises auf die Patenterteilung: **22.09.2021**
(21) Anmeldenummer: 19715828.0
(22) Anmeldetag: 19.03.2019
(51) Int. Cl.: B62D 53/12

(54) **SYSTEM UND VERFAHREN ZUM VERSCHWENKEN EINER KOPPLUNGSKOMPONENTE**
SYSTEM AND METHOD FOR PIVOTING A COUPLING COMPONENT
SYSTÈME ET PROCÉDÉ POUR FAIRE PIVOTER UN COMPOSANT D'ACCOUPLEMENT

(30) Priorität: 21.03.2018 DE 102018106677
(43) Veröffentlichungstag der Anmeldung: 27.01.2021
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2019/056835
(87) Internationale Veröffentlichungsnummer: WO 2019/180017

(56) Entgegenhaltungen:
- EP-A2- 0 084 712
- DE-A1-102006 033 899
- DE-B3-102006 033 900
- US-A- 5 346 239

## Beschreibung

Die vorliegende Erfindung betrifft ein System und ein Verfahren zum Verschwenken einer Kopplungskomponente.

Das Anbinden eines Sattelaufliegers an eine Sattelzugmaschine ist aus dem Stand der Technik hinlänglich bekannt. Hierzu verfügt der Sattelauflieger typischerweise über ein Zapfenelement, insbesondere einen Königszapfen, der in einem gekoppelten Zustand in eine entsprechende Sattelkupplung, oder auch Kupplungsplatte mit Kupplungshaken, an der Sattelzugmaschine eingreift. Neben dem mechanischen Anbinden des Sattelaufliegers an die Sattelzugmaschine gehört zum erfolgreichen Ankoppeln des Sattelaufliegers an die Sattelzugsmaschine auch das Verbinden von sattelzugmaschinenseitigen und aufliegerseitigen Leitungen, wie z. B. Luftdruckleitungen und elektrische Leitungen, die zur Versorgung der Lichtanlage oder anderer Elektronik erforderlich sind. Zur Führung der Leitungen ist vorzugsweise eine Kopplungskomponente vorgesehen, in oder an der die Leitungen in einen für die gewünschte Verbindung vorgesehenen Schnittstellenbereich geführt werden. Diese Kopplungskomponente ist vorzugsweise schwenkbar gelagert, um die Leitungen für die Kopplung einfach ausrichten zu können, wenn die Sattelzugmaschine und der Sattelauflieger beim Koppeln schräg, d. h. nicht fluchtend, zueinander ausgerichtet sind. Hierbei hat sich die Verwendung einer Drehvorrichtung, insbesondere in Form eines Satteldrehplateaus, etabliert.

Aus der DE 10 2006 033 900 B3 ist eine Leitungsabführung für einen Auflieger eines Sattelzuges bekannt, wobei eine Rahmenkonstruktion mit einer auf der Unterseite abschließenden Aufliegerplatte, an welcher der Königszapfen angeordnet ist, vorgesehen ist.

Die US 5 346 239 A beschreibt einen Sattelzug mit einer Versorgungskupplung, die automatisch verbunden wird, wenn Sattelzugmaschine und Sattelauflieger aneinandergekoppelt werden und automatisch getrennt wird, wenn die beiden Teilfahrzeuge voneinander getrennt werden.

Die DE 10 2006 033899 A1 beschreibt eine Steckerkonsole für einen Auflieger eines Sattelzuges. Dabei ist ein Stecker in einem um ein Lager schwenkbaren Tragelement angeordnet. Dessen Gehäuse ist durch Kontaktierung mit einer Einfahröffnung gegenüber dem Stecker verschiebbar, wodurch der Stecker aus einer geschlossenen Bereitschaftsstellung in eine geöffnete Kupplungsstellung verfahrbar ist.

Die EP 0 084 712 A2 beschreibt einen Verbindungsschalter für Versorgungskabel von Kraftfahrzeugen. Mittels einer luftbetriebenen Membran, welche zwischen zwei Abschnitten bewegt wird, werden elektrische Kontakte und pneumatische Leitungen verbunden.

Zur Führung der Leitungen sind dabei Spannarme an ihrem äußersten Ende schwenkbar um eine vertikale Achse an der Rahmenkonstruktion angebracht.

Die Verwendung der Drehvorrichtung und das Verschwenken der Kopplungskomponente beanspruchen allerdings die Leitungen, deren benötigte Länge sich abhängig von dem Grad der Verschwenkung ändert.

Ausgehend von diesem Hintergrund macht es sich die vorliegende Erfindung zur Aufgabe, ein verbessertes System zum Verschwenken der Kopplungskomponente bereitzustellen, mit dem sich die Leitungen auf Dauer weniger belasten lassen, insbesondere ohne wesentliche strukturelle Änderungen an einem für die Kopplungskomponente vorgesehen Drehmechanismus vorzunehmen.

Diese Aufgabe wird gelöst durch ein System gemäß Anspruch 1 und ein Verfahren gemäß Anspruch 10. Weitere Vorteile und Merkmale der Erfindung ergeben sich aus den Unteransprüchen sowie der Beschreibung und den beigefügten Figuren.

Erfindungsgemäß ist ein System zum Verschwenken einer Kopplungskomponente, insbesondere eines Auslegers, für einen Sattelzug, umfassend eine Drehvorrichtung, mittels der die Kopplungskomponente zu deren Ausrichtung zwischen einer Primärlage und einer Sekundärlage verschwenkbar ist und mindestens eine Leitung, die über die Drehvorrichtung in die Kopplungskomponente geführt wird, wobei das System einen Schwenkarm zur Mitführung der Leitung bei einem Verschwenken der Kopplungskomponente zwischen der Primärlage und der Sekundärlage umfasst. Im Gegensatz zum Stand der Technik ist erfindungsgemäß ein Schwenkarm vorgesehen, der die Leitungen zusätzlich zur Führung durch die Kopplungskomponente beim Verschwenken zwischen der Primärlage und der Sekundärlage mitführt. Durch die zusätzliche Führung kann die Bewegung der Leitung, insbesondere bei der Rückführung in die Primärlage, zusätzlich kontrolliert werden und die Ausrichtung der Leitung entsprechend schonender vorgenommen werden. Dabei ist es vorzugsweise vorgesehen, dass die Drehvorrichtung in einen Fahrzeugrahmen, insbesondere eine Bodenplatte, des Sattelaufliegers eingelassen ist. Dabei ist die Kopplungskomponente an der Drehvorrichtung an einer einer Fahrbahn zugewandten Seite montiert, während der Schwenkarm auf einer der Unterseite gegenüberliegenden Oberseite des Fahrzeugrahmens montiert ist. Damit sorgt die Kopplungskomponente auf der Unterseite des Fahrzeugrahmens für die Führung der Leitung, während der Schwenkarm auf der Oberseite des Fahrzeugrahmens die Leitung führt. Dabei greift die Leitung durch die Drehvorrichtung, um von der Oberseite mit dem Schwenkarm zur Unterseite mit der Kopplungskomponente geführt zu werden. Grundsätzlich sind unter Leitungen alle zur Versorgung des Sattelaufliegers dienenden Leitungen zu verstehen, wie z. B. elektrische oder pneumatische Leitungen. Es kann sich dabei um eine einzelne Leitung oder bevorzugt um ein Bündel an Leitungen handeln. Die Leitungen münden ferner in der Kopplungskomponente in eine Steckerkonsole bzw. -buchse, die zur Kopplung mit einer komplementär ausgestalteten weiteren Steckerkonsole bzw. -buchse am Sattelauflieger ausgelegt ist. Weiterhin ist es vorgesehen, dass eine Längsachse der Kopplungskomponente in der Primärlage im Wesentlichen parallel zu einer Mittelachse des Sattelaufliegers verläuft und beispielsweise in einer Sekundärlage gegenüber der Mittelachse bis zu 90° oder sogar bis zu 120° geneigt bzw. verdreht verläuft. Weiterhin ist es bevorzugt vorgesehen, dass im Zentrum der Drehvorrichtung ein Zapfenelement, insbesondere ein Königszapfen, angeordnet ist, um den die Kopplungskomponente um eine Drehachse verschwenkbar gelagert ist. Über das Zapfenelement erfolgt die mechanische Kopplung des Sattelaufliegers an die Sattelzugmaschine. Weiterhin ist es bevorzugt vorgesehen, dass die Steckerkonsole auf das Zapfenelement ausgerichtet ist und die Kopplungskomponente bevorzugt in der Primärlage in Fahrtrichtung gesehen hinter dem Zapfenelement angeordnet ist. Darüber hinaus ist es vorstellbar, dass die Leitung bzw. die Leitungen über eine oder mehrere Befestigungen, bzw. Befestigungsösen, beispielsweise in regelmäßigen Abständen, an dem Schwenkarm fixiert sind. Insbesondere ist es vorgesehen, dass das Verschwenken der Kopplungskomponente und das Verschwenken des Schwenkarms miteinander gekoppelt sind, insbesondere über die Drehvorrichtung miteinander gekoppelt sind. Beispielsweise sind die Kopplungskomponente und der Schwenkarm beide an die Drehvorrichtung gebunden, so dass bei einer Drehung durch die Drehvorrichtung gleichermaßen die Kopplungskomponente und der Schwenkarm verschwenkt bzw. verdreht werden.

Vorzugsweise weist der Schwenkarm einen Hohlkörperbereich, in dem vorzugsweise zumindest teilweise die Leitung angeordnet ist, auf. Dadurch lassen sich die Leitungen vorzugsweise geschützt im Hohlkörperbereich anordnen und werden beim Verschwenken des Schwenkarm mitgeführt.

Zweckmäßigerweise ist es vorgesehen, dass die Leitung derart dimensioniert ist, dass sie in der Primärlage und der Sekundärlage und insbesondere für jede Ausrichtung der Kopplungskomponente zwischen der Primärlage und der Sekundärlage spannungsfrei im Hohlkörperbereich angeordnet ist. Vorzugsweise ist die Leitung derart lang dimensioniert, dass sie bei einer vorgesehenen maximalen Auslenkung für die Sekundärlage innerhalb des Hohlkörperbereichs verläuft ohne zu überspannen. Beispielsweise ist bei einer maximalen Auslenkung die Kopplungskomponente bis zu 120°, bevorzugt bis zu 90° gegenüber der Primärlage verschwenkt. Dabei ist es vorstellbar, dass die Leitungen im Hohlkörperbereich gestaucht bzw. unter Bildung von Schlaufen bzw. Schleifen oder wellenartig innerhalb des Hohlkörperbereichs verlaufen. Dadurch lässt sich die infolge der Schwenkbewegung veranlasste erforderliche Längenänderung innerhalb des Hohlraumbereichs kontrollieren. Dadurch kann mit Vorteil auf eine Vorrichtung verzichtet werden, mit der die erforderliche Längenänderung mit einem entsprechenden Mechanismus kompensiert wird.

Insbesondere ist es vorgesehen, dass in einem montierten Zustand der Schwenkarm in einem ersten Bereich gleitend und/oder schwenkbar an einem Fahrzeugrahmen, vorzugsweise an einem Stützelement, gelagert ist und in einem zweiten Bereich schwenkbar an die Drehvorrichtung gebunden ist. Vorzugsweise ist der Schwenkarm kurbelartig an die Drehvorrichtung angebunden.

Vorzugsweise ist der Schwenkarm in einem zweiten Bereich schwenkbar an die Drehvorrichtung gebunden oder der Schwenkarm ist in einem ersten Bereich gleitend gelagert.

Vorzugsweise ist es vorgesehen, dass der Schwenkarm mindestens ein Gelenk aufweist. Dadurch lässt sich der Schwenkarm beispielsweise in vorteilhafter Weise abknicken, wenn er in Anschlag gerät mit einer seitlichen Begrenzung. Dadurch begrenzt der Schwenkarm mit Vorteil nicht die maximale Auslenkung der Zugmaschine gegenüber dem Sattelauflieger. Stattdessen kann der Schwenkarm abknicken und eine weitere Verdrehung des Sattelaufliegers gegenüber der Zugmaschine ist dennoch möglich. Zudem lässt sich eine bauraumökomisches System bereitstellen, bei dem nicht entsprechender Bauraum freigehalten werden muss, um dem verschwenkenden Schwenkarm einen für die Bewegung erforderlichen Platz bereitzustellen. Beispielsweise ist das Gelenk zwischen dem ersten und dem zweiten Bereich angeordnet bzw. ausgebildet.

Weiterhin ist es vorstellbar, dass der Schwenkarm in seiner Längserstreckung schräg, d. h. nicht parallel, ausgerichtet ist zur Fahrbahn bzw. zu einer Bodenplatte des Fahrzeugs. Der Schwenkarm ist beispielsweise aus einem Metall, einem Kunststoff oder einem kohlefaserverstärkten Kunstsoff ausgebildet. Zudem ist es denkbar, dass der Schwenkarm zu mindestens einer Seite hin offen ist. Dadurch ist es beispielsweise möglich, einen einfachen und direkten Zugriff auf die im Schwenkarm mitgeführten Leitungen zu erhalten, beispielsweise wenn diese repariert oder gewartet werden müssen. Es ist auch vorstellbar, dass der Schwenkarm eine Öffnung aufweist, die einen direkten Zugriff auf die Leitungen im Schwenkarm gestattet. Diese Öffnung ist vorzugweise mit einem Verschlusselement versehen, die es gestattet das Innere des Hohlraums vor Umwelteinflüssen zu schützten. Bei Bedarf, z. B. bei einer Reparatur oder einer Wartung, kann dann auf das Innere des Hohlraums zugegriffen werden, wenn das Verschlusselement entnommen oder weggeklappt wird.

Zweckmäßigerweise weist das System zur Rückführung des Schwenkarms von der Sekundärlage in die Primärlage ein Federelement auf, wobei das Federelement vorzugsweise zwischen dem ersten Bereich und dem zweiten Bereich angeordnet ist. Denkbar sind beispielsweise mehrere Federelemente. Insbesondere ist das Federelement derart gelagert bzw. angeordnet, dass es bei der Überführung der Drehvorrichtung von der Primärlage in die Sekundärlage verspannt wird. Vorzugsweise weist das Federelement keine Vorspannung in der Primärlage auf. Es ist aber auch denkbar, dass das Federelement in der Primärlage vorgespannt ist, wobei insbesondere die Vorspannung in der Primärlage kleiner ist als in der Sekundärlage bzw. für die Auslenkungen zwischen der Primärlage und der Sekundärlage, so dass eine automatische Rückkehr in die Primärlage sichergestellt werden kann. Besonders bevorzugt ist es vorgesehen, dass eine Verschiebung des Schenkarms bei der Überführung von der Primärlage in die Sekundärlage zum Verspannen des Federelements genutzt werden kann. Alternativ ist es auch vorstellbar, dass das Federelement mit einem Ende an die Drehvorrichtung und mit dem anderen Ende an den Fahrzeugrahmen angebunden ist. Insbesondere ist es vorgesehen, dass das Federelement am Schwenkarm und an einem festen Punkt am Fahrzeug angebunden ist.

Insbesondere ist das Federelement mit einem Ende an einem Stützelement, durch das der Schwenkarm hindurchgeführt wird, angebunden. Das Stützelement schwenkt sich bei der Drehbewegung der Drehvorrichtung mit und stellt dabei dem Federelement eine ausreichende Stütze bereit. Vorzugsweise ist das Federelement mit seinem anderen Ende an den Schwenkarm angebunden. Insbesondere wird dann bei einem Verschieben des Schwenkarms der Abstand zwischen dem ersten Ende und dem zweiten Ende verkürzt und so das Federelement vorgespannt. Vorstellbar sind beispielsweise Druck- und/oder Zugfedern. Dadurch kann das Stützelement auf der gleichen Seite des Zapfenelements angeordnet sein, wie die Drehvorrichtung. Entsprechend kann bei einer Auslenkung der Abstand vergrößert und die Feder gespannt werden.

Vorteilhafterweise ist das Federelement als Spiralfeder ausgestaltet, die vorzugsweise den Schwenkarm umgreift. Dadurch wird in vorteilhafter Weise das Federelement besonders bauraumsparend ausgestaltet.

Erfindungsgemäß weist die Drehvorrichtung einen scheibenförmigen, um eine Drehachse drehbaren Drehteller auf, wobei in dem Drehteller in einem Abstand zur Drehachse eine Öffnung zum Hindurchführen der Leitung vorgesehen ist. Über die Öffnung lässt sich die Leitung mit Vorteil sowohl oberhalb als auch unterhalb des Fahrzeugrahmens, insbesondere einer Bodenplatte des Fahrzeugrahmens, anordnen. Dabei ist es bevorzugt vorgesehen, einen möglichst großen Anteil der Leitung oberhalb des Fahrzeugrahmens anzuordnen, um zu verhindern, dass die Leitung unterhalb des Fahrzeugrahmens beim Ankoppeln zwischen das Zapfenelement und die Sattelkupplung der Sattelzugmaschine gerät.

Vorzugsweise nimmt ein Verhältnis des Abstandes der Öffnung zur Drehachse zu einem Radius des Drehtellers einen Wert zwischen 0,25 und 0,78, bevorzugt zwischen 0,3 und 0,65 und besonders bevorzugt zwischen 0,35 und 0,45 an. Dadurch lässt sich die Leitung mit Vorteil in einem ausreichen großem Abstand zum Zapfenelement durch die Drehvorrichtung, insbesondere den Drehteller, führen, ohne dass der mit wachsendem Abstand zur Drehachse zunehmende erforderliche Längenüberschuss für die Leitung zu groß wird.

Zweckmäßigerweise verläuft die Leitung bis zur Öffnung auf einer einer Fahrbahn abgewandten Oberseite des Fahrzeugrahmens zumindest bereichsweise im Schwenkarm, während die Kopplungskomponente die Leitung auf der der Oberseite gegenüberliegenden Unterseite des Fahrzeugrahmens unterhalb der Öffnung führt. Dadurch lässt sich die Leitung sowohl an der Oberseite als auch an der Unterseite jeweils entsprechend führen. Insbesondere ist es vorgesehen, dass die Leitung im Bereich der Drehvorrichtung geführt wird, um zu verhindern, dass die Leitung die Funktionalität der Drehvorrichtung einschränkt oder sogar behindert. Vorzugsweise ist oberhalb der Öffnung der Schwenkarm derart gestaltet, dass er einen Freibereich für die Leitungen bereitstellt. Der Freibereich kann beispielsweise zum Ansammeln der Leitungsüberlängen genutzt werden, die beim Überführen zwischen der Primärlage und der Sekundärlage zur Längenkompensation der Leitung erforderlich sind.

Insbesondere ist die Öffnung in der Primärlage in Fahrtrichtung gesehen hinter einem Zapfenelement zur Ankopplung eines Sattelaufliegers an eine Sattelzugmaschine angeordnet. Dadurch kann mit Vorteil verhindert werden, dass die Leitung in der Primärlage beim Ankoppeln zwischen dem Zapfenelement und der Sattelkopplung der Sattelzugmaschine angeordnet ist. Vorzugsweise ist die Öffnung in der Primärlage auf einer Mittelachse des Sattelaufliegers angeordnet.

Vorzugsweise nimmt ein Verhältnis zwischen einem Radius des Drehtellers zu einer in Längsrichtung des Schwenkarms bemessenen Länge des Schwenkarms einen Wert zwischen 0,25 und 0,8, bevorzugt zwischen 0,35 und 0,65 und besonders bevorzugt zwischen 0,45 und 0,55 an. Dadurch kann mit Vorteil sichergestellt werden, dass die Leitung oberhalb der Drehvorrichtung, insbesondere oberhalb des Drehtellers, vom Schwenkarm geführt wird.

Erfindungsgemäß ist der Schwenkarm teleskopartig ausgebildet, wobei der Schwenkarm seine Länge beim Verschwenken der Kopplungskomponente zwischen der Primärlage und der Sekundärlage verändert. Dadurch kann z. B. der Schwenkarm derart gestaltet werden, dass er nicht über den ersten Bereich übersteht, d. h. der Schwenkarm erstreckt sich nur bis zum ersten Bereich und stützt sich beispielweise mit seinem einen Ende an dem Stützelement ab. Um unabhängig von der Ausrichtung der Kopplungskomponente sicherzustellen, dass die Leitung zwischen dem ersten Bereich und dem zweiten Bereich von dem Schwenkarm geführt wird, lässt sich der Schwenkarm in seiner Länge entsprechend variieren.

Ein weiterer Gegenstand der vorliegenden Erfindung ist ein Verfahren zum Verschwenken einer Kopplungskomponente, insbesondere eines Auslegers, wobei eine Drehvorrichtung, mittels der die Kopplungskomponente zwischen einer Primärlage und einer Sekundärlage verschwenkbar ist, und mindestens eine Leitung, die über die Drehvorrichtung in die Kopplungskomponente geführt wird, vorgesehen sind, wobei ein Schwenkarm zur Mitführung der Leitung beim Verschwenken der Kopplungskomponente zwischen der Primärlage und des Sekundärlage verschwenkt wird. Alle für das erfindungsgemäße System beschriebenen Merkmale und deren Vorteile lassen sich sinngemäß ebenfalls auf das erfindungsgemäße Verfahren übertragen und andersherum.
- Fig.1:: ein von unten betrachtetes System zum Verschwenken einer Kopplungskomponente für eine Kopplung zwischen einem Sattelzug und einem Sattelauflieger gemäß einer bevorzugten Ausführungsform in einer perspektivischen Ansicht (oben) und einer Draufsicht (unten),
- Fig. 2: das von unten betrachtete System zum Verschwenken einer Kopplungskomponente für eine Kopplung zwischen einem Sattelzug und einem Sattelauflieger aus Fig. 1 in einer perspektivischen Ansicht (oben) und einer Draufsicht (unten) und
- Fig. 3: eine Schnittansicht des Systems aus den Figuren 1 und 2.

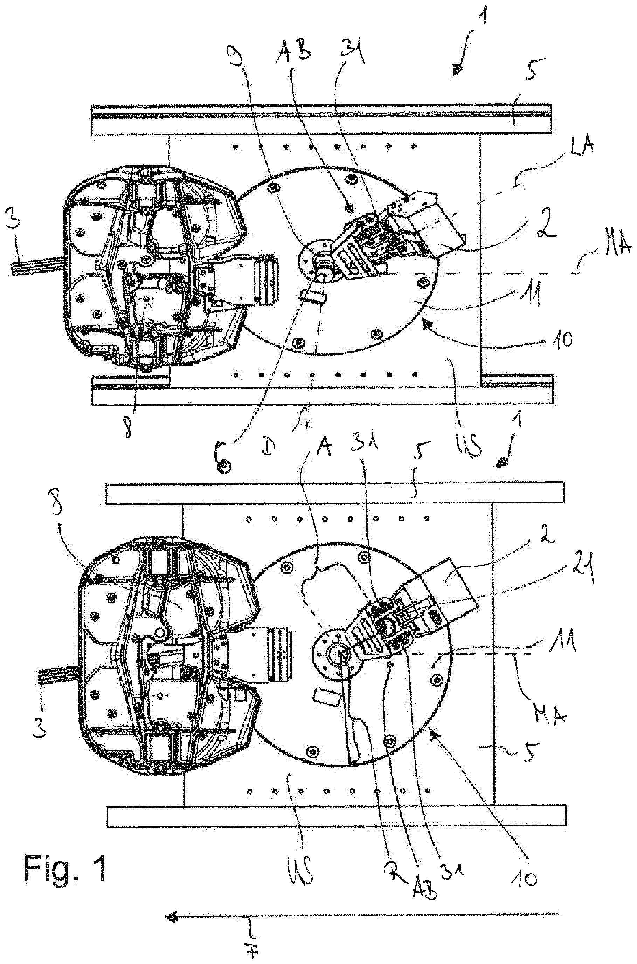

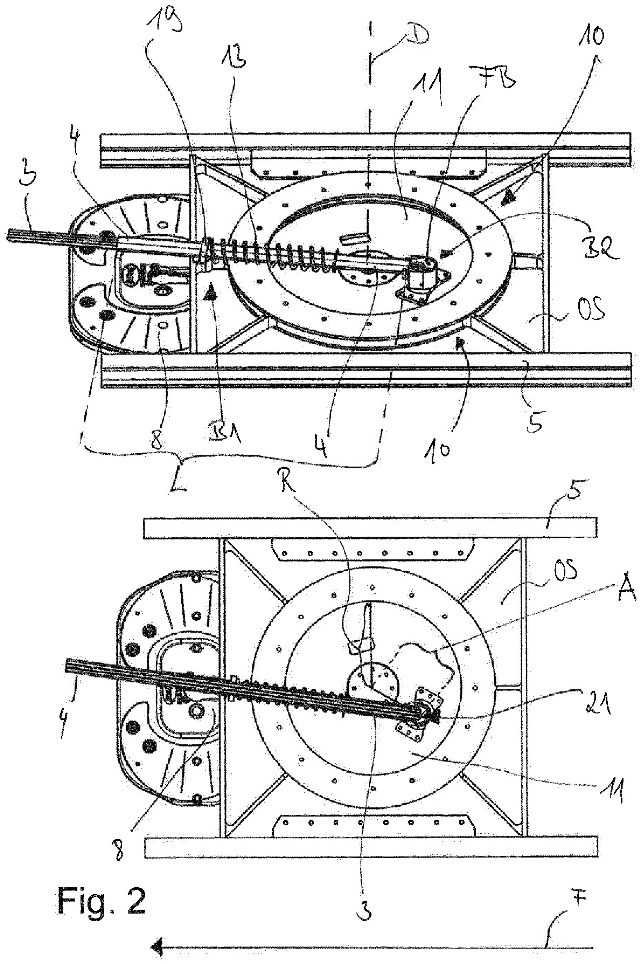

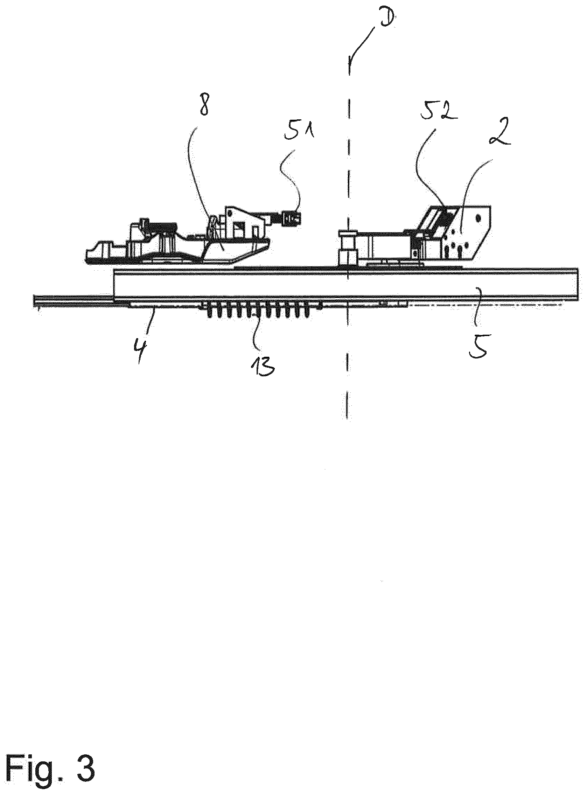

In den Figuren 1 bis 3 ist ein System 1 zum Verschwenken einer Kopplungskomponente 2 gemäß einer bevorzugten Ausführungsform der vorliegenden Erfindung dargestellt. Die Kopplungskomponente 2, insbesondere ein Ausleger, wird dabei zum Koppeln zwischen einer Sattelzugmaschine und einem Sattelauflieger in einem Schnittstellenbereich verwendet. Insbesondere zeigen die Figuren 1 bis 3 einen Zustand, in dem der Sattelauflieger und die Sattelzugmaschine noch nicht miteinander gekoppelt sind. Unter einem Schnittstellenbereich zwischen dem Sattelzug und dem Sattelauflieger ist insbesondere der Bereich zu verstehen, in dem der Sattelauflieger an die Sattelzugmaschine angebunden wird, vorzugsweise automatisch angebunden wird. Beispielsweise erfolgt die Anbindung des Sattelaufliegers an die Sattelzugmaschine über ein aufliegerseitiges Zapfenelement 6, das im angekoppelten Zustand in eine sattelzugmaschinenseitige Sattelkupplung 8 eingreift. Neben der mechanischen Kupplung ist es auch erforderlich, dass aufliegerseitige und sattelzugmaschinenseitige Leitungen 3 bzw. Versorgungsleitungen, wie z. B. eine Gasdruckleitung bzw. Luftdruckleitung oder eine elektrische Leitung 4, über einen entsprechenden Steck- bzw. Anschlussmechanismus im Schnittstellenbereich miteinander verbunden werden können. Die Kopplungskomponente 2 dient dabei zur Führung der Leitungen 3 sowie zu deren Ausrichtung beim Ankoppeln, insbesondere auf einer der Fahrzeugbahn zugewandten Unterseite eines Fahrzeugrahmens 5 des Sattelaufliegers. Vorzugsweise umfasst der Fahrzeugrahmen Plattenelemente, insbesondere eine Bodenplatte, und/oder stegförmige Streben. Zu Führung und Ausrichtungen der Leitungen 3 sind diese innenliegend oder außenliegend an die Kopplungskomponente 2 angebunden und die Kopplungskomponente verfügt beispielsweise über eine Steckerbuchse oder -konsole 52, in die die aufliegerseitigen Leitungen münden. Mittels der Steckerbuchse bzw. -konsole 52 erfolgt das Verbinden der Leitungen 3 mit einer komplementären weiteren Steckerbuchse bzw. -konsole 51 der Sattelzugmaschine (siehe Figur 3). Die Kopplungskomponente 2 ist dabei im Wesentlichen gabelförmig ausgestaltet und weist beispielsweise Längsstreben, Querstreben und/oder geschlossene Blechbereiche aus, die zur Stabilisierung der Kopplungskomponente dienen und an denen die Leitungen geführt und montiert werden können. In dem dargestellten Ausführungsbeispiel ist die Steckerbuchse oder -konsole 52 derart an der Kopplungskomponente 2 angeordnet, dass die Steckerbuchse oder -konsole 52 unabhängig von der Ausrichtung der Kopplungskomponente 2 auf das Zapfenelement 6 gerichtet ist.

Zur Ausrichtung der Kopplungskomponente 2, insbesondere beim Ankoppeln des Sattelaufliegers an die Sattelzugmaschine, ist es vorgesehen, dass die Kopplungskomponente 2 zwischen einer Primärlage und einer Sekundärlage verschwenkbar ist. Die Primärlage entspricht dabei vorzugsweise einer Ruhelage, in der eine Längsachse LA der Kopplungskomponente 2 im Wesentlichen parallel zu einer Mittelachse MA des Sattelaufliegers verläuft. In der Sekundärlage ist die Längsachse LA der Kopplungskomponente beispielsweise bis zu 90° oder sogar bis zu 120° gegenüber der Mittelachse MA geneigt bzw. verdreht. In den Figuren 1 bis 3 ist die Kopplungskomponente in einer möglichen Sekundärlage dargestellt.

Zum Verschwenken zwischen der Primärlage und der Sekundärlage ist insbesondere eine Drehvorrichtung 10 vorgesehen, mit der die Kopplungskomponente 2 drehfest verbunden ist. Die Drehvorrichtung 10 umfasst insbesondere einen scheibenförmigen Drehteller 11, der in einem Fahrzeugrahmen 5 eingelassen ist und um eine Drehachse D drehbar gelagert ist. Im Zentrum des Drehtellers 11 ist das Zapfenelement 7 angeordnet und steht gegenüber dem Drehteller 1 in Richtung der Fahrbahn, d. h. nach unten, ab bzw. steht von der Unterseite US des Fahrzeugrahmens 5 ab. Die Kopplungskomponente 2 ist insbesondere an einer Unterseite US, d. h. einer der Fahrbahn zugewandten Seite des Sattelaufliegers, an den Drehteller 11 so angebunden, dass bei einer Drehbewegung des Drehtellers 11 die Kopplungskomponente 2 mitverschwenkt wird. Vorzugsweise ist die Kopplungskomponente 2 über Flansche 31 in einem Anbindungsbereich AB an die Unterseite des Drehtellers 11 angebunden, wobei der Anbindungsbereich AB bezogen auf die Drehachse gegenüber dem Zapfenelement 6 radial nach außen versetzt ist. In dem in den Figuren illustrierten Beispiel ist die Kopplungskomponente 2 zusätzlich über eine Hülse bzw. eine Manschette 9 am Zapfenelement 6 drehbar angebunden.

Um zu verhindern, dass die Leitungen 3 an der Unterseite US ein Anbinden an die Sattelkupplung 8 behindern, ist es vorgesehen, dass die Leitungen 3 auf der der Fahrbahn abgewandten Oberseite OS des Fahrzeugrahmens 5 bis zu einer Öffnung 21 geführt werden. Die bis zu der Öffnung 21 geführten Leitungen 3 greifen dann durch die Öffnung 21 hindurch und gelangen so zu der unterhalb der Öffnung 21 angeordneten Kopplungskomponente 2, die an der der Oberseite OS gegenüberliegenden Unterseite der Drehvorrichtung 10 montiert ist. Vorzugsweise ist die Öffnung 21 in der Primärlage in Fahrrichtung F (Vorwärtsfahrt) gesehen in einem Bereich hinter dem Zapfenelement 6 angeordnet. Dadurch kann mit Vorteil beispielsweise die Wahrscheinlichkeit gemindert werden, dass die Leitung 3 beim Ankoppeln in den Bereich zwischen das Zapfenelement 6 und die Sattelkupplung 8 der Sattelzugmaschine gelangen kann.

Insbesondere ist es vorgesehen, dass die Öffnung 21 um einen Abstand A vom Zapfenelement 6, durch das die Drehachse D vorzugsweise mittig verläuft, angeordnet ist, wobei ein Verhältnis des Abstand A zu einem Radius R des Drehtellers 11 einen Wert zwischen 0,25 und 0,78, bevorzugt zwischen 0,3 und 0,65 und besonders bevorzugt zwischen 0,35 und 0,45 besteht. Dadurch lässt sich die Öffnung 21 ausreichend weit von dem zentralen Zapfenelement 6 distanzieren und gleichzeitig wird die erforderliche Längenänderung beim Verdrehen möglichst klein gehalten.

Auf der Oberseite OS des Fahrzeugrahmens 5 ist es vorgesehen, dass die Leitung 3 zur Öffnung 21 mittels eines Schwenkarms 4 geführt wird. D. h. während die Leitung 3 an der Unterseite US von der Öffnung 21 weg zur Steckerkonsole 52 geführt wird, wird die Leitung 3 mittels des Schwenkarms 4 an der Oberseite OS des Fahrzeugrahmens 5 geführt. Hierzu erstreckt sich der Schwenkarm 4 bis zur Öffnung 21. Insbesondere ist es vorgesehen, dass der Schwenkarm 4 bei einer Ausrichtung der Drehvorrichtung 10 in die Primärlage sich bis hin zu einem Rand der Öffnung 21 erstreckt. Vorzugsweise ist der Schwenkarm 4 am Fahrzeugrahmen 5 in einem ersten Bereich B1 schiebbar und/oder schwenkbar an den Fahrzeugrahmen 5 angebunden, während der Schwenkarm 4, vorzugsweise mit einem seiner Enden, in einem zweiten Bereich B2 an den Drehteller 11, insbesondere an eine Oberseite des Drehtellers 11, schwenkbar, beispielsweise über ein Gelenkelement, angebunden ist. Dabei ist es vorzugsweise vorgesehen, dass der Schwenkarm 4 einen Hohlkörperbereich umfasst, in dem die Leitung 3 zumindest bereichsweise geführt werden kann. Weiterhin ist es vorgesehen, dass in einer senkrecht zur Fahrtrichtung F bzw. senkrecht zur Fahrbahn verlaufenden Richtung, ein Freibereich FB im Schwenkarm oberhalb der Öffnung aufzufinden ist. In dem Freibereich FB liegen die Leitungen frei. Vorzugsweise bilden die Leitungen im Freibereich FB und/oder im Hohlkörperbereich einen Speicherraum bereit, in den die Leitung in der Primärlage hineingestaucht werden können, ggf. unter Bildung einer Schlaufe, um ein Reservoir bereitzustellen, der für einen Längenüberschuss der Leitung 3 zur Auslenkung in die Sekundärlage benötigt wird. Mit anderen Worten: im Freibereich FB und/oder Hohlraum werden die für die Schwenkbewegung der Kopplungskomponenten erforderlichen Leitungsüberlängen gezielt gesammelt. Dadurch wird mit Vorteil sichergestellt, dass der erforderliche Längenüberschuss in der Primärlage auf der Oberseite OS des Fahrzeugrahmens 5 gesammelt bzw. konzentriert wird. Im Umkehrschluss lässt sich eine Schleifenbildung in der Leitung unterhalb des Fahrzeugrahmens 5 reduzieren bzw. vermeiden.

Weiterhin ist ein Federelement 13 vorgesehen, mit dem sich der Drehteller 11 von der Sekundärlage in die Primärlage überführen lässt. Insbesondere ist das Federelement 13 zwischen dem ersten Bereich B1 und dem zweiten Bereich B2 angeordnet und ist beispielsweise als Spiralfeder ausgeformt, die den Schwenkarm 4 umgreift. Vorzugsweise erstreckt sich das Federelement 13 zwischen dem ersten Bereich B1 und dem zweiten Bereich B2 über eine Länge, die größer ist als die Hälfte der Distanz zwischen dem ersten Bereich B1 und dem zweiten Bereich B2. Dabei ist das Federelement 13 derart gestaltet bzw. konfiguriert, dass das Federelement 13 bei der Überführung des Drehtellers 11 von der Primärlage in die Sekundärlage vorgespannt wird. Diese Vorspannung wirkt rückstellend auf den Drehteller 11, wenn keine weitere äußere Kraft auf die Drehvorrichtung 10 bzw. den Drehteller 11 wirkt. Das Federelement 13 stützt sich hierzu bevorzugt im ersten Bereich B1 ab bzw. ist auf der dem ersten Bereich B1 zugewandten Seite zwischen dem ersten Bereich B1 und dem zweiten Bereich B2 angeordnet. Insbesondere ist der Schwenkarm 4 im ersten Bereich B1 in einem drehbaren Stützelement 19, beispielsweise einer Manschette bzw. Hülse, gelagert. In diesem Stützelement ist der Schwenkarm verschiebbar gelagert. Weiterhin ist es vorzugsweise vorgesehen, dass das Federelement sich an dem Stützelement abstützt.

Weiterhin nimmt das Verhältnis zwischen dem Radius R des Drehtellers 11 zu einer in Längsrichtung des Schwenkarms 4 bemessenen Länge L des Schwenkarms einen Wert zwischen 0,25 und 0,8, bevorzugt zwischen 0,35 und 0,65 und besonders bevorzugt zwischen 0,45 und 0,55 an.
- 1: System
- 2: Kopplungskomponente
- 4: Schwenkarm
- 5: Fahrzeugrahmen
- 6: Zapfenelement
- 8: Sattelkupplung
- 9: Manschette
- 10: Drehvorrichtung
- 11: Drehteller
- 13: Federelement
- 19: Stützelement
- 21: Öffnung
- 31: Flansch
- 51: weitere Steckerkonsole
- 52: Steckerkonsole
- AB: Anbindungsbereich
- US: Unterseite
- OS: Oberseite
- B1: erster Bereich
- B2: zweiter Bereich
- D: Drehachse
- F: Fahrtrichtung
- FB: Freibereich
- L: Länge
- R: Radius
- A: Abstand
- LA: Längsachse
- MA: Mittelachse

## Patentansprüche

1. System (1) zum Verschwenken einer Kopplungskomponente (2), insbesondere eines Auslegers, für einen Sattelzug, umfassend
- eine Drehvorrichtung (10), mittels der die Kopplungskomponente (2) zwischen einer Primärlage und einer Sekundärlage verschwenkbar ist und
- mindestens eine Leitung (3), die über die Drehvorrichtung (10) in die Kopplungskomponente (2) geführt wird,
wobei das System (1) einen Schwenkarm (4) zur Mitführung der Leitung beim Verschwenken der Kopplungskomponente (2) zwischen der Primärlage und der Sekundärlage umfasst,
wobei der Schwenkarm (4) teleskopartig ausgebildet ist,
wobei der Schwenkarm (4) seine Länge beim Verschwenken der Kopplungskomponente (2) zwischen der Primärlage und der Sekundärlage verändert,
**dadurch gekennzeichnet, dass** die Drehvorrichtung (10) einen scheibenförmigen, um eine Drehachse (D) drehbaren Drehteller (11) aufweist,
wobei in dem Drehteller (11) in einem Abstand (A) zur Drehachse (D) eine Öffnung (21) zum Hindurchführen der Leitung (3) eingelassen ist.

2. System (1) gemäß Anspruch 1,
wobei der Schwenkarm (4) einen Hohlkörperbereich, in dem vorzugsweise zumindest teilweise die Leitung (3) angeordnet ist, aufweist.

3. System (1) gemäß Anspruch 2, wobei die Leitung (3) derart dimensioniert ist, dass sie in der Primärlage und der Sekundärlage spannungsfrei im Hohlkörperbereich angeordnet ist.

4. System (1) gemäß einem der vorhergehenden Ansprüche,
wobei in einem montierten Zustand der Schwenkarm (4) in einem ersten Bereich (B1) gleitend und/oder schwenkbar an einem Fahrzeugrahmen (4), vorzugsweise an einem Stützelement (19), gelagert ist und in einem zweiten Bereich (B2) schwenkbar an die Drehvorrichtung (10) gebunden ist.

5. System (1) gemäß Anspruch 4,
wobei das System (1) zur Rückführung des Schwenkarms (4) von der Sekundärlage in die Primärlage ein Federelement (13) aufweist, wobei das Federelement (13) vorzugsweise zwischen dem ersten Bereich (B1) und dem zweiten Bereich (B2) angeordnet ist.

6. System (1) gemäß Anspruch 5, wobei das Federelement (13) mit einem Ende an einem Stützelement (19), durch das der Schwenkarm (4) hindurchgeführt wird, angebunden ist.

7. System gemäß Anspruch 5 oder 6, wobei das Federelement (13) als Spiralfeder ausgestaltet ist, die vorzugsweise den Schwenkarm (4) umgreift.

8. System (1) gemäß einem der vorhergehenden Ansprüche,
wobei ein Verhältnis des Abstandes (A) der Öffnung (21) zur Drehachse (D) zu einem Radius (R) des Drehtellers (11) einen Wert zwischen 0,25 und 0,78, bevorzugt zwischen 0,3 und 0,65 und besonders bevorzugt zwischen 0,35 und 0,45, annimmt.

9. System (1) gemäß Anspruch 7 oder 8,
wobei die Leitung (3) bis zur Öffnung (21) auf einer einer Fahrbahn abgewandten Oberseite (OS) des Fahrzeugrahmens (5) verläuft und vorzugsweise die Kopplungskomponente (2) die Leitung (3) auf der der Oberseite (OS) gegenüberliegenden Unterseite (US) des Fahrzeugrahmens (5) unterhalb der Öffnung (21) führt.

10. System (1) gemäß einem der Ansprüche 7 bis 9, wobei die Öffnung (21) in der Primärlage in Fahrrichtung (F) gesehen hinter einem Zapfenelement (6) zur Ankopplung eines Sattelaufliegers (12) an eine Sattelzugmaschine (11) angeordnet ist.

11. System (1) gemäß einem der Ansprüche 8 bis 10,
wobei ein Verhältnis zwischen einem Radius (R) des Drehtellers (11) zu einer in Längsrichtung des Schwenkarms (4) bemessenen Länge des Schwenkarms (4) einen Wert zwischen 0,25 und 0,8, bevorzugt zwischen 0,35 und 0,65 und besonders bevorzugt zwischen 0,45 und 0,55, annimmt.

12. Verfahren zum Verschwenken einer Kopplungskomponente (2), insbesondere eines Auslegers, wobei
- eine Drehvorrichtung (10), mittels der die Kopplungskomponente (2) zwischen einer Primärlage und einer Sekundärlage verschwenkbar ist und
- mindestens eine Leitung (3), die über die Drehvorrichtung (10) in die Kopplungskomponente (2) geführt wird,
vorgesehen sind,
wobei ein Schwenkarm (4) zur Mitführung der Leitung beim Verschwenken der Kopplungskomponente (2) zwischen der Primärlage und der Sekundärlage verschwenkt wird,
wobei der Schwenkarm (4) teleskopartig ausgebildet ist,
wobei der Schwenkarm (4) seine Länge beim Verschwenken der Kopplungskomponente (2) zwischen der Primärlage und der Sekundärlage verändert,
**dadurch gekennzeichnet, dass** die Drehvorrichtung (10) einen scheibenförmigen, um eine Drehachse (D) drehbaren Drehteller (11) aufweist,
wobei in dem Drehteller (11) in einem Abstand (A) zur Drehachse (D) eine Öffnung (21) zum Hindurchführen der Leitung (3) eingelassen ist.

## Claims

1. A system (1) for pivoting a coupling component (2), in particular an outrigger, for a semi-trailer tractor, comprising
- a rotation device (10) by means of which the coupling component (2) can be pivoted between a primary position and a secondary position and
- at least one line (3), which is guided via the rotation device (10) into the coupling component (2),
wherein the system (1) comprises a pivot arm (4) for entraining the line when the coupling component (2) is pivoted between the primary position and the secondary position,
wherein the pivot arm (4) is designed telescopic,
wherein the pivot arm (4) changes its length when the coupling component (2) is pivoted between the primary position and the secondary position,
**characterized in that** the rotation device (10) comprises a disc-shaped turntable (11) rotatable about an axis of rotation (D),
wherein an opening (21) for the passage of the line (3) is recessed in the turntable (11) at a distance (A) from the axis of rotation (D).

2. The system (1) according to claim 1,
wherein the pivot arm (4) has a hollow body area in which preferably at least partially the line (3) is arranged.

3. The system (1) according to claim 2, wherein the line (3) is dimensioned in such a way that it is arranged stress-free in the hollow body area in the primary position and the secondary position

4. The system (1) according to one of the preceding claims,
wherein in an assembled state the pivot arm (4) is mounted in a first area (B1) sliding and/or pivotably on a vehicle frame (4), preferably on a support element (19), and in a second area (B2) is pivotably connected to the rotation device (10).

5. The system (1) according to claim 4,
the system (1) comprising a spring element (13) for returning the pivot arm (4) from the secondary position to the primary position, the spring element (13) preferably being arranged between the first area (B1) and the second area (B2).

6. The system (1) according to claim 5, wherein the spring element (13) is connected with one end to a support element (19) through which the pivot arm (4) is passed.

7. The system according to claim 5 or 6, wherein the spring element (13) is designed as a spiral spring which preferably embraces the pivot arm (4).

8. The system (1) according to according to one of the preceding claims,
wherein a ratio of the distance (A) of the opening (21) to the axis of rotation (D) to a radius (R) of the turntable (11) assumes a value between 0.25 and 0.78, more preferably between 0.3 and 0.65 and most preferably between 0.35 and 0.45.

9. The system (1) according to claim 7 or 8,
wherein the line (3) extends up to the opening (21) on an upper side (OS) of the vehicle frame (5) facing away from a roadway and preferably the coupling component (2) guides the line (3) on the underside (US) of the vehicle frame (5) opposite the upper side (OS) below the opening (21).

10. The system (1) according to one of claims 7 to 9, wherein the opening (21) in the primary position, viewed in the direction of travel (F), is arranged behind a pin element (6) for coupling a semi-trailer (12) to a tractor unit (11).

11. The system (1) according to one of claims 8 to 10,
wherein a ratio between a radius (R) of the turntable (11) and a length of the pivot arm (4) measured in the longitudinal direction of the pivot arm (4) assumes a value between 0.25 and 0.8, preferably between 0.35 and 0.65 and particularly preferably between 0.45 and 0.55.

12. A method for pivoting a coupling component (2), in particular an outrigger, wherein
- a rotation device (10) by means of which the coupling component (2) can be pivoted between a primary position and a secondary position and
- at least one line (3), which is guided via the rotation device (10) into the coupling component (2),
are provided,
wherein a pivot arm (4) for guiding the line is pivoted between the primary position and the secondary position when the coupling component (2) is pivoted,
wherein the pivot arm (4) is designed telescopic,
wherein the pivot arm (4) changes its length when the coupling component (2) is pivoted between the primary position and the secondary position,
**characterized in that** the rotation device (10) comprises a disc-shaped turntable (11) rotatable about an axis of rotation (D),
wherein an opening (21) for the passage of the line (3) is recessed in the turntable (11) at a distance (A) from the axis of rotation (D).

## Revendications

1. Système (1) pour faire pivoter un composant d'attelage (2), en particulier un avant-bras, pour un véhicule articulé à semi-remorque, comprenant
- un dispositif de rotation (10) au moyen duquel le composant d'attelage (2) peut être pivoté entre une position primaire et une position secondaire, et
- au moins une conduite ou ligne (3), qui est menée jusque dans le composant d'attelage (2) par l'intermédiaire du dispositif de rotation (10),
dans lequel
le système (1) comprend un bras pivotant (4) destiné à emmener la conduite ou ligne lors du pivotement du composant d'attelage (2) entre la position primaire et la position secondaire,
le bras pivotant (4) est de conception télescopique,
le bras pivotant (4) modifie sa longueur lors du pivotement du composant d'attelage (2) entre la position primaire et la position secondaire,
**caractérisé en ce que**
le dispositif de rotation (10) comprend un plateau rotatif (11) en forme de disque pouvant tourner autour d'un axe de rotation (D),
une ouverture (21) étant ménagée dans le plateau tournant (11) à une distance (A) de l'axe de rotation (D) pour le passage de la conduite ou ligne (3).

2. Système (1) selon la revendication 1,
dans lequel le bras pivotant (4) comprend une zone formant corps creux dans laquelle est disposée de préférence au moins partiellement la conduite ou ligne (3).

3. Système (1) selon la revendication 2,
dans lequel la conduite ou ligne (3) est dimensionnée de telle sorte qu'elle est disposée sans contrainte dans la zone formant corps creux, dans la position primaire et dans la position secondaire.

4. Système (1) selon l'une des revendications précédentes,
dans lequel, dans un état assemblé, le bras pivotant (4) est monté sur un châssis de véhicule (4), de préférence sur un élément de support (19), de manière à pouvoir glisser et/ou pivoter dans une première zone (B1), et est attaché au dispositif de rotation (10) de manière à pouvoir pivoter dans une seconde zone (B2).

5. Système (1) selon la revendication 4,
dans lequel le système (1) comprend un élément de ressort (13) pour ramener le bras pivotant (4) de la position secondaire à la position primaire, l'élément de ressort (13) étant disposé de préférence entre la première zone (B1) et la seconde zone (B2).

6. Système (1) selon la revendication 5,
dans lequel l'élément de ressort (13) est attaché par une extrémité à un élément de support (19) à travers lequel est mené le bras pivotant (4).

7. Système selon la revendication 5 ou 6,
dans lequel l'élément de ressort (13) est conçu comme un ressort en spirale qui entoure de préférence le bras pivotant (4).

8. Système (1) selon l'une des revendications précédentes,
dans lequel un rapport de la distance (A) de l'ouverture (21) à l'axe de rotation (D) sur le rayon (R) du plateau tournant (11) prend une valeur comprise entre 0,25 et 0,78, de préférence entre 0,3 et 0,65 et de manière particulièrement préférée entre 0,35 et 0,45.

9. Système (1) selon la revendication 7 ou 8,
dans lequel la conduite ou ligne (3) s'étend jusqu'à l'ouverture (21) sur un côté supérieur (OS) du châssis de véhicule (5) détourné d'une chaussée et, de préférence, le composant d'attelage (2) mène la conduite ou ligne (3) sur le côté inférieur (US) du châssis de véhicule (5) opposé au côté supérieur (OS), en dessous de l'ouverture (21).

10. Système (1) selon l'une des revendications 7 à 9,
dans lequel l'ouverture (21) est disposée, en position primaire, vue dans le sens de circulation (F), derrière un élément formant pivot (6) d'attelage d'une semi-remorque (12) à un véhicule tracteur de semi-remorque (11).

11. Système (1) selon l'une des revendications 8 à 10,
dans lequel un rapport entre un rayon (R) du plateau tournant (11) et une longueur du bras pivotant (4) mesurée dans la direction longitudinale du bras pivotant (4) prend une valeur comprise entre 0,25 et 0,8, de préférence entre 0,35 et 0,65 et de manière particulièrement préférée entre 0,45 et 0,55.

12. Procédé pour faire pivoter un composant d'attelage (2), en particulier un avant-bras, dans lequel sont prévus
- un dispositif de rotation (10) permettant de faire pivoter le composant d'attelage (2) entre une position primaire et une position secondaire, et
- au moins une conduite ou ligne (3) qui est menée jusque dans le composant d'attelage (2) par l'intermédiaire du dispositif de rotation (10),
dans lequel
un bras pivotant (4) destiné à emmener la conduite ou ligne est pivoté lors du pivotement du composant d'attelage (2) entre la position primaire et la position secondaire,
le bras pivotant (4) est de conception télescopique,
le bras pivotant (4) modifie sa longueur lors du pivotement du composant d'attelage (2) entre la position primaire et la position secondaire,
**caractérisé en ce que**
le dispositif de rotation (10) comprend un plateau rotatif (11) en forme de disque pouvant tourner autour d'un axe de rotation (D),
une ouverture (21) étant ménagée dans le plateau tournant (11) à une distance (A) de l'axe de rotation (D) pour le passage de la conduite ou ligne (3).
